# EUROPEAN PATENT APPLICATION

(11) **EP 4 131 600 A1**
(43) Date of publication of application: **08.02.2023**
(21) Application number: 21776148.5
(22) Date of filing: 15.03.2021
(51) Int. Cl.: H01M 50/20, H01M 50/30

(54) **ELECTRICAL STORAGE FACILITY**

(30) Priority: 27.03.2020 JP 2020058216
(71) Applicant: GS Yuasa International Ltd., Kisshoin, Minami-ku, Kyoto-shi, Kyoto 601-8520 (JP)
(72) Inventor: YAMANE, Hisayuki, Ritto-shi Shiga 520-3021 (JP); KUSUNOKI, Toshiki, Ritto-shi Shiga 520-3021 (JP); KAWAUCHI, Tomohiro, Ritto-shi Shiga 520-3021 (JP); HIDAKA, Tsuyoshi, Ritto-shi Shiga 520-3021 (JP)
(74) Representative: Grünecker Patent- und Rechtsanwälte PartG mbB
(86) International application number: PCT/JP2021/010451
(87) International publication number: WO 2021/193206

(57) **Abstract**

An energy storage facility (900) includes: an energy storage apparatus (1) that includes an energy storage device (11), a discharge path (140) for a gas discharged from the energy storage device (11), and a gas discharge port (100a) for the gas; and a housing (rack (901)) that houses the energy storage apparatus (1), wherein the housing includes a gas discharge portion (rear cover (930)) that includes: a wall portion (932) that faces the gas discharge port (100a); and a gas discharge opening (opening portion (935)) that is formed in the wall portion (932) for discharging the gas, and the gas discharge portion includes a protrusion (933) that protrudes from the wall portion (932) toward the gas discharge port (100a).

## Description

### TECHNICAL FIELD

The present invention relates to an energy storage facility that includes energy storage devices.

### BACKGROUND ART

Conventionally, there has been known an energy storage facility that includes: energy storage devices; and a discharge path for a gas discharged from the energy storage devices. Patent Document 1 discloses a facility (energy storage facility) that includes: unit cells (energy storage devices); and a gas discharge pipe (discharge path) that is mounted in an assembled battery in which the unit cells are stacked and discharges a gas generated from the unit cells.

### PRIOR ART DOCUMENT

### PATENT DOCUMENT

Patent Document 1: JP-A-2013-218790

### SUMMARY OF THE INVENTION

### PROBLEMS TO BE SOLVED BY THE INVENTION

In the energy storage facility having the configuration described above, there is a concern that discharge ability of discharging a gas to the outside is lowered.

Accordingly, it is an object of the present invention to provide an energy storage facility that can suppress the lowering of discharge ability of discharging a gas to the outside.

### MEANS FOR SOLVING THE PROBLEMS

According to an aspect of the present invention, there is provided an energy storage facility that comprises: an energy storage apparatus that includes an energy storage device, a discharge path for a gas discharged from the energy storage device, and a gas discharge port (emission port) for the gas; and a housing that houses the energy storage apparatus, wherein the housing includes: a wall portion that faces the gas discharge port; and a gas discharge portion including a gas discharge opening (exhaust outlet) that is formed in the wall portion for discharging the gas, and the gas discharge portion includes a protrusion that protrudes from the wall portion toward the gas discharge port.

The present invention can be realized not only as such an energy storage facility but also as a housing or a combination of the housing and the discharge path and/or the energy storage device.

### ADVANTAGES OF THE INVENTION

According to the energy storage facility of the present invention, the energy storage facility can suppress the lowering of discharge ability of discharging a gas to the outside.

### BRIEF DESCRIPTION OF THE DRAWINGS

Fig. 1 is a perspective view illustrating an external appearance of an energy storage facility according to an embodiment.
Fig. 2 is a perspective view illustrating an external appearance of the energy storage facility according to the embodiment.
Fig. 3 is a perspective view illustrating an external appearance of an energy storage apparatus according to the embodiment.
Fig. 4 is an exploded perspective view illustrating respective constituent elements of an energy storage unit that the energy storage apparatus according to the embodiment includes in a state where the energy storage unit is disassembled.
Fig. 5 is an exploded perspective view of respective constituent elements of a path forming member according to the embodiment in a state where the path forming member is disassembled.
Fig. 6 is a perspective view illustrating the configuration of the path forming member and a rear cover (gas discharge portion) according to the embodiment.
Fig. 7 is a cross-sectional view illustrating the configuration of the path forming member and the rear cover (gas discharge portion) according to the embodiment.
Fig. 8A is a view for describing an effect obtained by forming protrusions on the rear cover (gas discharge portion) according to the embodiment.
Fig. 8B is a view for describing an effect obtained by forming the protrusions on the rear cover (gas discharge portion) according to the embodiment.
Fig. 9 is a perspective view illustrating the configuration of a rear cover (gas discharge portion) according to a modification example of the embodiment.

### MODE FOR CARRYING OUT THE INVENTION

In the conventional energy storage facility having the configuration described above, when a gas is discharged from the energy storage device, the content in the energy storage device is discharged together with the gas. Accordingly, there may be a case where a substance may be scattered from the discharge path. There may be a case where a gas discharge opening is formed on an exit side of the discharge path. In this case, when a substance scatters from the discharge path, the substance clogs the gas discharge opening, and there is a possibility that the discharge ability for discharging a gas to the outside is lowered.

The inventors of the present invention have focused on the problem to be solved described above, and have made the present invention. It is an object of the present invention to provide an energy storage facility capable of suppressing the lowering of gas discharge ability of discharging a gas to the outside.

To achieve the object described above, according to an aspect of the present invention, there is provided an energy storage facility that comprises: an energy storage apparatus that includes an energy storage device, a discharge path for a gas discharged from the energy storage device, and a gas discharge port (emission port) for the gas; and a housing that houses the energy storage apparatus, wherein the housing includes a gas discharge portion that includes: a wall portion that faces the gas discharge port; and a gas discharge opening (exhaust outlet) that is formed in the wall portion for discharging the gas, and the gas discharge portion includes a protrusion that protrudes from the wall portion toward the gas discharge port.

With such a configuration, in the energy storage facility, the gas discharge portion of the housing that houses the energy storage apparatus includes the gas discharge opening for discharging a gas on the wall portion that faces the gas discharge port for a gas that the energy storage apparatus includes. The gas discharge portion also includes the protrusion that protrudes from the wall portion toward the gas discharge port. In this manner, the protrusion that protrudes from the wall portion toward the gas discharge port of the energy storage apparatus is formed on the gas discharge portion of the housing. Accordingly, even when a substance such as the content in the energy storage device is discharged from the gas discharge port together with a gas, the substance is stopped at the protrusion or is cut by the protrusion and hence, it is possible to suppress the clogging of the gas discharge opening by the substance. Therefore, in the energy storage facility, when a gas is discharged from the energy storage device, it is possible to suppress the lowering of the gas discharge ability of discharging the gas to the outside.

The gas discharge opening may be a slit formed in the wall portion, and the protrusion may protrude toward the gas discharge port on one side of the slit.

In a case where the protrusion has a cylindrical shape such that the protrusion surrounds the periphery of the slit, when a substance such as the content in the energy storage device adheres to the protrusion, there is a possibility that the substance may clog the slit. However, the protrusion is configured to protrude on one side of the slit. Accordingly, a gap is easily formed even when the substance adheres to the protrusion and hence, it is possible to suppress clogging of the slit by the substance. Accordingly, it is possible to suppress the lowering of the gas discharge ability of discharging a gas to the outside.

The protrusion may protrude from an end edge of the gas discharge opening toward the gas discharge port.

With such a configuration, in the gas discharge portion, the protrusion protrudes from the end edge of the gas discharge opening and hence, the protrusion is disposed close to the gas discharge opening. Accordingly, it is possible to effectively suppress a substance such as the content in the energy storage device from clogging the gas discharge opening and hence, it is possible to effectively suppress the lowering of gas discharge ability of discharging a gas to the outside.

The protrusion may be disposed extending in a longitudinal direction of the gas discharge opening.

With such a configuration, in the gas discharge portion, the protrusion extends in the longitudinal direction of the gas discharge opening and hence, a substance such as contents in the energy storage device remains on the protrusion or is cut by the protrusion over the longitudinal direction of the gas discharge opening. Accordingly, it is possible to effectively suppress a substance from clogging the gas discharge opening over the longitudinal direction of the gas discharge opening in the longitudinal direction of the gas discharge opening and hence, it is possible to effectively suppress the lowering of gas discharge ability of discharging a gas to the outside.

The protrusion may be formed integrally with the wall portion.

With such a configuration, in the gas discharge portion, the protrusion is integrally formed with the wall portion disposed adjacently to the gas discharge opening. Accordingly, the protrusion can be easily formed by bending the protrusion from the wall portion. In this case, the number of parts can be reduced compared with a case where the protrusion is formed as a part separate from the wall portion. As has been described above, the energy storage facility can suppress the lowering of discharge ability of discharging a gas to the outside with the simple configuration.

The gas discharge opening may extend in a direction that intersects with a longitudinal direction of the gas discharge port.

With such a configuration, the gas discharge opening of the gas discharge portion extends in the direction that intersects with the longitudinal direction of the gas discharge port. Accordingly, a substance that is elongated in the direction that intersects with the gas discharge opening is easily discharged from the gas discharge port. As a result, if the protrusion is not formed on the gas discharge portion, a substance hardly passes through the gas discharge opening, and stays at the gas discharge opening and is liable to clog the gas discharge opening. Therefore, even in the configuration where the discharge opening extends in the direction that intersects with the longitudinal direction of the gas discharge portion, by forming the protrusion on the gas discharge portion, it is possible to suppress a substance from clogging the gas discharge opening. Accordingly, it is possible to suppress the lowering of the gas discharging ability of discharging a gas to the outside.

Hereinafter, the energy storage facility according to the embodiment (including modification examples of the embodiment) of the present invention is described with reference to the drawings. All embodiments described hereinafter are a comprehensive example or a specific example. In the following embodiment, numerical values, shapes, materials, constituent elements, arrangement positions and connection modes of the constituent elements, and the like are provided as examples, and are not intended to limit the present invention. In the respective drawings, sizes and the like are not strictly illustrated.

In the description made hereinafter and in the drawings, an arrangement direction of a plurality of energy storage apparatuses arranged on one shelf plate, an arrangement direction of a pair of electrode terminals (a positive electrode side and a negative electrode side) on one energy storage device, a direction that a pair of short side surfaces of a container of one energy storage device faces each other, a direction that a pair of long side surfaces of an outer case of the energy storage unit faces each other is defined as an X-axis direction. A direction that a front cover and a rear cover face each other, an insertion direction that the energy storage apparatus is inserted with respect to a shelf plate, an arrangement direction of the plurality of energy storage devices, a direction that a pair of long side surfaces of the container of the energy storage device face each other, and a direction that a pair of short side surfaces of the outer case of the energy storage unit face each other are defined as a Y-axis direction. An arrangement direction of the plurality of shelf plates, an arrangement direction of an outer case support and an outer case lid of the energy storage unit, an arrangement direction of the energy storage devices and bus bars, an arrangement direction of the container body and the lid of the energy storage device, or a vertical direction is defined as a Z-axis direction. These X-axis direction, Y-axis direction, and Z-axis direction are directions that intersect with each other (orthogonal to each other in the embodiment). A case is also considered where the Z-axis direction is not the vertical direction depending on a use mode. However, in the description made hereinafter, for the sake of convenience of the description, the description is made by assuming the Z-axis direction as the vertical direction.

In the description made hereinafter, an X-axis positive direction indicates an arrow direction of the X-axis, and an X-axis negative direction indicates a direction opposite to the X-axis positive direction. The same goes for the Y-axis direction and the Z-axis direction. Hereinafter, the Y-axis positive direction may also be referred to as a predetermined direction. Expressions indicating the relative directions or the relative postures such as "parallel" or "orthogonal" also include cases where such directions or postures are not considered as such directions or such postures in a strict meaning of the terms. A state where two directions are orthogonal to each other means not only a state where these two directions are completely orthogonal to each other but also a state where these two directions are substantially orthogonal to each other, that is, for example, a state where these two directions are not orthogonal to each other with slight deviation of approximately several percent.

### (Embodiment)

### [1 Description of configuration of energy storage facility 900]

First, the configuration of an energy storage facility 900 according to this embodiment is described. The energy storage facility 900 is a stationary energy battery board that stores electric power generated by wind power generation, solar power generation or the like, and stably supplies the electric power to an external installation.

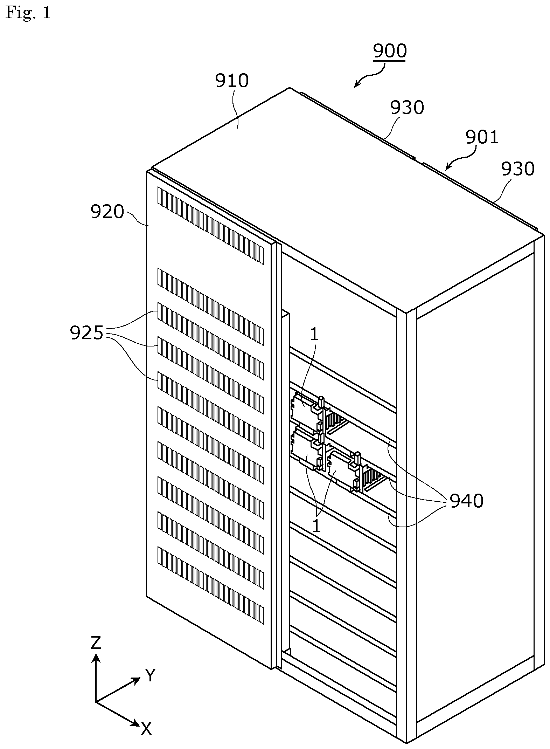

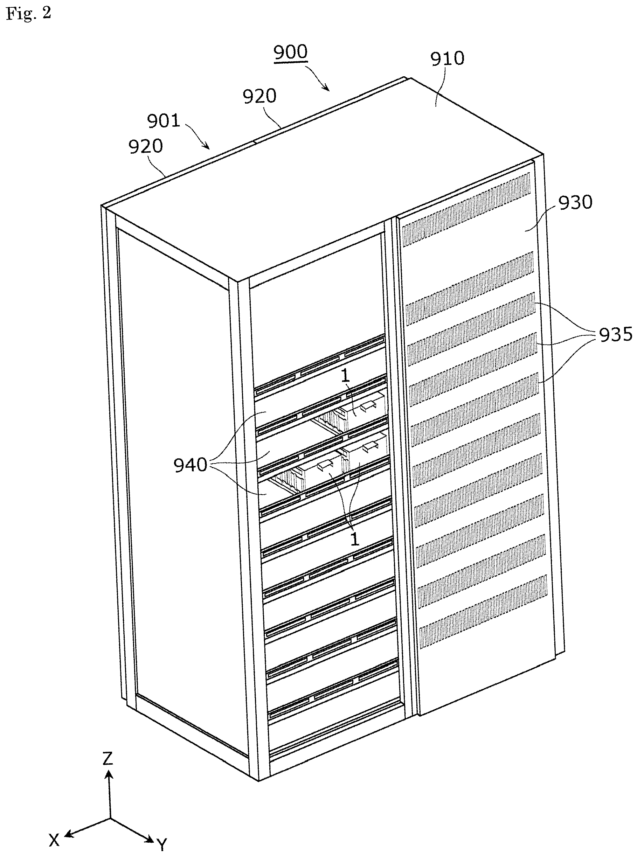

Fig. 1 and Fig. 2 are perspective views illustrating an external appearance of the energy storage facility 900 according to this embodiment. Specifically, Fig. 1 is a perspective view illustrating the configuration of the energy storage facility 900 as viewed from a front side, and Fig. 2 is a perspective view of the configuration of the energy storage facility 900 as viewed from a back side.

As illustrated in Fig. 1 and Fig. 2, the energy storage facility 900 includes: a rack 901; and a plurality of energy storage apparatuses 1. The rack 901 is a housing having a rectangular parallelepiped shape that houses a plurality of energy storage apparatuses 1. The rack 901 is formed of a metal member made of metal such as stainless steel, aluminum, an aluminum alloy, iron, a plated steel plate, or the like. A material of the rack 901 is not limited to metal, and some members that constitute the rack 901 may be made of a resin or the like. The shape of the rack 901 is not limited to a rectangular parallelepiped shape. The rack 901 is an example of a housing that houses the energy storage apparatuses 1.

The rack 901 includes: a rack body 910; a pair of front covers 920; a pair of rear covers 930; and a plurality of shelf plates 940. In Fig. 1, out of the pair of front covers 920, one front cover 920 (on an X-axis positive direction side) is not illustrated. In Fig. 2, out of the pair of rear covers 930, one rear cover 930 (on an X-axis positive direction side) is not illustrated. Fig. 1 and Fig. 2 illustrate a case where three energy storage apparatuses 1 in total are installed on the plurality of shelf plates 940. However, the number of installed energy storage apparatuses 1 is not limited to three.

The rack body 910 is a rectangular box body made of metal, for example, and an opening is formed on a front surface and a back surface of the rack body 910 respectively. The opening formed on the rack body 910 on a front surface side is covered (closed) by the pair of front covers 920. The pair of front covers 920 is disposed side by side in the X-axis direction. The front covers 920 are mounted on a front portion of the rack body 910 so as to open and close an opening formed on the rack body 910 in the front surface side. The opening formed on the rack body 910 on a back surface side is covered (closed) by the pair of rear covers 930. The pair of rear covers 930 is disposed side by side in the X-axis direction. The rear covers 930 are mounted on a back portion of the rack body 910 so as to open and close the opening formed in the rack body 910 on the back surface side.

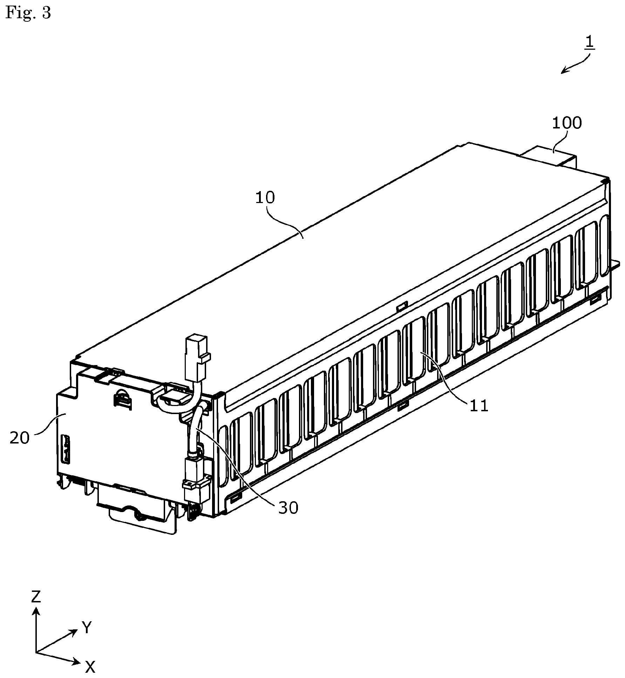

In the rack body 910, besides the plurality of energy storage apparatuses 1, an electric circuit unit (not illustrated in the drawing) that is connected to the plurality of energy storage apparatuses 1 is accommodated. A wiring breaker (circuit breaker), a control circuit, and the like are accommodated in the electric circuit unit. The circuit breaker is disposed on a main circuit through which a main current for charging and discharging the respective energy storage apparatuses 1 flows, and the control circuit is connected to the circuit board units 20 (see Fig. 3) of the respective energy storage apparatuses 1 by signal lines (not illustrated).

A plurality of opening portions 925 for ventilation are formed on the front cover 920, and a plurality of opening portions 935 for ventilation are formed on the rear cover 930. The opening portions 925 are slits that are elongated in the Z-axis direction and are arranged in the X-axis direction and the Z-axis direction on the front cover 920. The opening portions 935 are slits that are elongated in the Z-axis direction and are arranged in the X-axis direction and the Z-axis direction on the rear cover 930. The inside of the rack body 910 is ventilated by the plurality of opening portions 925 and the plurality of opening portions 935 so that heat is not accumulated in the rack body 910.

The shelf plate 940 is a support member that supports the plurality of energy storage apparatuses 1. In the rack body 910, the plurality of shelf plates 940 are arranged in the Z-axis direction at a predetermined interval. Specifically, the shelf plate 940 is a member having a flat plate shape and a rectangular shape that is disposed parallel to an XY plane. The plurality of energy storage apparatuses 1 can be mounted on one shelf plate 940 such that the energy storage apparatuses 1 are arranged in the X-axis direction.

The opening portion 925 faces an end of the energy storage apparatus 1 mounted on the shelf plate 940 on the Y-axis negative direction side, and the opening portion 935 faces an end of the energy storage apparatus 1 on the Y-axis positive direction side. With such a configuration, the heat discharged from the energy storage apparatuses 1 can be smoothly discharged from the opening portions 925 and the opening portions 935 to the outside of the rack 901. Particularly, when a gas is discharged from the energy storage apparatus 1, the opening portions 935 are used as gas discharge openings for discharging the gas to the outside of the rack 901. That is, the rear cover 930 is disposed in a predetermined direction (Y-axis positive direction) of the energy storage apparatuses 1 (path forming members 100 described later), and functions as a gas discharge portion where the gas discharge openings through which a gas that is discharged from the energy storage apparatus 1 (the path forming member 100) is discharged are formed.

The energy storage apparatus 1 is an apparatus into which electricity can be charged from the outside and from which electricity can be discharged to the outside. In this embodiment, the energy storage apparatus 1 has an approximately rectangular parallelepiped shape. The energy storage apparatus 1 is used in an electricity storage application, a power source application, or the like. Specifically, the energy storage apparatus 1 can be used as a stationary battery or the like that is used as a home-use or industry-use energy storage facility or the like. The energy storage apparatus 1 can be used as a battery or the like for driving a mobile body such as an automobile, a motorcycle, a watercraft, a ship, a snowmobile, an agriculture machine, a construction machine, or a railway vehicle for an electric railway, or is used as a battery for starting an engine of the mobile body. As the above-described automobile, an electric vehicle (EV), a hybrid electric vehicle (HEV), a plug-in hybrid electric vehicle (PHEV), and a gasoline automobile are exemplified. As the above-described railway vehicle for an electric railway, an electric train, a monorail, and a linear motor car are exemplified. Hereinafter, the configuration of the energy storage apparatus 1 is described in detail.

### [2 Description of configuration of energy storage apparatus 1]

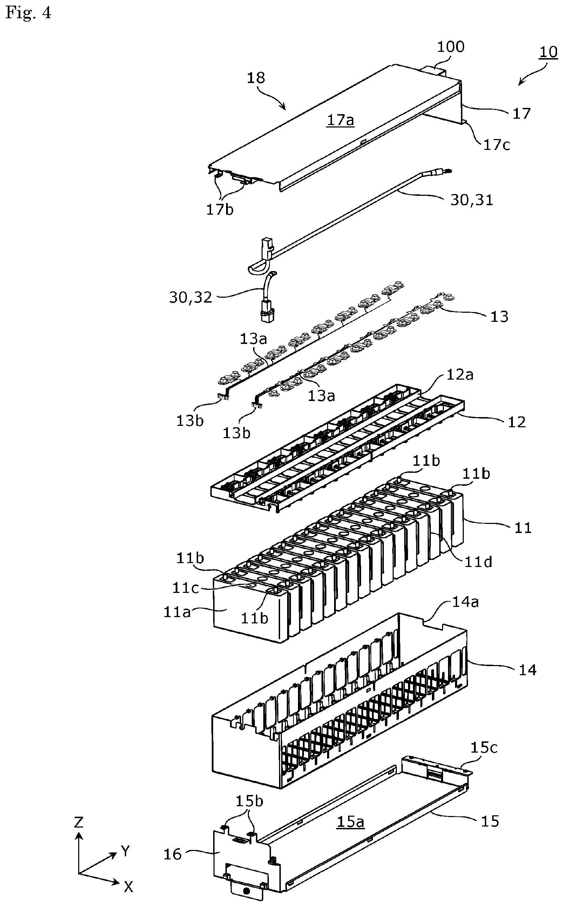

Fig. 3 is a perspective view illustrating an external appearance of the energy storage apparatus 1 according to the present exemplary embodiment. Fig. 4 is an exploded perspective view of an energy storage unit 10 that the energy storage apparatus 1 according to the embodiment includes illustrating respective constituent elements in a state where the energy storage unit 10 is disassembled.

As illustrated in Fig. 3 and Fig. 4, the energy storage apparatus 1 includes: the energy storage unit 10; and the circuit board unit 20 mounted on the energy storage unit 10. The energy storage unit 10 is a battery module (assembled battery) having a substantially rectangular parallelepiped shape elongated in the Y-axis direction. Specifically, the energy storage unit 10 includes: a plurality of energy storage devices 11; a bus bar frame 12; a plurality of bus bars 13; an outer case 18 that is formed of an outer case body 14 that houses these members, an outer case support 15 and an outer case lid 17; and a path forming member 100. A cable 30 is connected to the energy storage unit 10. The energy storage unit 10 may include constraining members (end plates, side plates and the like) that constrain the plurality of energy storage devices 11.

### [2.1 Description of configuration of energy storage device 11]

The energy storage device 11 is a secondary battery (battery cell) that can charge electricity or discharge electricity. More specifically, the energy storage device 11 is a nonaqueous electrolyte secondary battery such as a lithium ion secondary battery. The energy storage device 11 has a flat rectangular parallelepiped shape (prismatic shape). In this embodiment, sixteen pieces of energy storage devices 11 are arranged side by side in the Y-axis direction. A spacer 11d having a flat plate shape and a rectangular shape that possesses a heat insulating property is disposed between the energy storage devices 11 disposed adjacently to each other. The shape, the arrangement positions, the number, and the like of the energy storage devices 11 are not particularly limited. The energy storage device 11 is not limited to a nonaqueous electrolyte secondary battery. The energy storage device 11 may be a secondary battery other than the nonaqueous electrolyte secondary battery, or may be a capacitor. The energy storage device 11 is not necessarily a secondary battery, and may be a primary battery that allows a user to use stored electricity even when the user does not charge the battery. The energy storage device 11 may be a pouch-type energy storage device.

Specifically, the energy storage device 11 includes: a container 11a; and a pair of electrode terminals 11b (the electrode terminal 11b on a positive electrode side and the electrode terminal 11b on a negative electrode side). In the container 11a, an electrode assembly, a pair of current collectors (a current collector on a positive electrode side and a current collector on a negative electrode side), an electrolyte solution (nonaqueous electrolyte), and the like are accommodated. However, these constituent elements are not illustrated in the drawing. A kind of the electrolyte solution is not particularly limited provided that the performance of the energy storage device 11 is not impaired, and various kinds of electrolyte solutions can be selected. A gasket or the like is disposed between the container 11a, the electrode terminals 11b, and the current collectors in order to enhance insulation and gas tightness. However, the illustration of these constituent elements is also omitted. Spacers may be disposed on sides or the like of the current collectors, and an insulating sheet that covers an outer surface of the container 11a may be disposed.

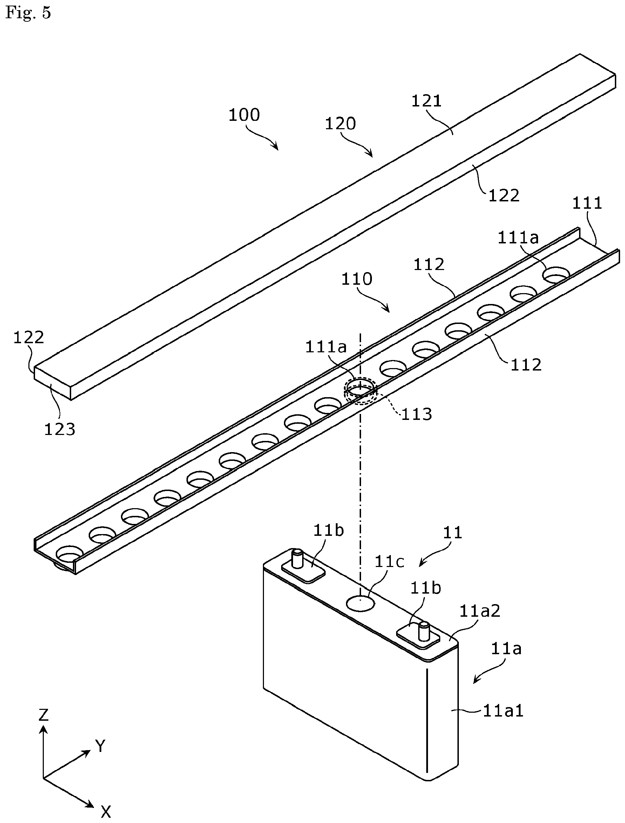

The container 11a is a container having a rectangular parallelepiped shape (prismatic shape). The container 11a includes: a container body 11a1 in which an opening is formed (see Fig. 5); and a lid portion 11a2 that closes the opening of the container body 11a1 (see Fig. 5). The container body 11a1 is a bottomed rectangular cylindrical member that forms a body portion of the container 11a. The container body 11a1 has: a pair of long sidewall portions on side surfaces of the container body 11a1 on both sides in the Y axis direction; a pair of short side wall portions on side surfaces of the container body 11a1 on both sides in the X axis direction; and a bottom wall portion on the Z-axis negative direction side. The lid portion 11a2 is a plate-shaped member having a rectangular shape that forms a lid portion of the container 11a. The lid portion 11a2 is disposed on the Z-axis positive direction side of the container body 11a1. A gas release valve 11c is disposed on the lid portion 11a2 between the pair of electrode terminals 11b. The gas release valve 11c discharges a gas so as to release a pressure in the container when the pressure in the container 11a is increased. In this embodiment, the plurality of energy storage devices 11 are arranged in a posture where the gas release valves 11c face the same direction (Z-axis positive direction). An electrolyte solution filling portion or the like for filling an electrolyte solution in the container 11a may be mounted on the lid portion 11a2. The material of the container 11a is not particularly limited. However, for example, it is preferable that the container 11a be made of metal that is weldable such as stainless steel, aluminum, an aluminum alloy, iron, or a plated steel plate.

The electrode terminals 11b are terminals (positive electrode terminal and negative electrode terminal) that are electrically connected to a positive electrode plate and a negative electrode plate of the electrode assembly via the current collectors. The electrode terminals 11b are formed of a metal (conductive) member made of metal such as aluminum, an aluminum alloy, copper, or a copper alloy. The pair of electrode terminals 11b protrudes upward (Z-axis positive direction) from the lid portion 11a2. The outermost electrode terminals 11b that the plurality of energy storage devices 11 have are connected to the cable 30. With such a configuration, electricity from the outside can be charged to the energy storage apparatus 1, and electricity charged in the energy storage apparatus 1 can be discharged to the outside. The cable 30 is an electric wire (also referred to as a main circuit cable, a power supply cable, a power cable, a power supply line, or a power line) through which a current (also referred to as a charge or discharge current or a main current) for charging or discharging the energy storage apparatus 1 (energy storage device 11) flows. The cable 30 includes: a positive electrode power supply cable 31 on a positive electrode side; and a negative electrode power supply cable 32 on a negative electrode side.

The electrode assembly is an energy storage element (power generating element) formed by stacking a positive electrode plate, a negative electrode plate, and a separator to each other. The positive electrode plate is formed such that a positive active material layer is formed on a positive electrode substrate layer that is a current collecting foil made of metal such as aluminum or an aluminum alloy. The negative electrode plate is formed such that a negative active material layer is formed on a negative electrode substrate layer that is a current collecting foil made of metal such as copper or a copper alloy. As an active material used for forming the positive active material layer and an active material used for forming the negative active material layer, known materials can be appropriately used provided that these materials can occlude and discharge lithium ions. The electrode assembly may be an electrode assembly in any form such as a winding-type electrode assembly formed by winding plates (a positive electrode plate and a negative electrode plate), a stacking-type (lamination-type) electrode assembly formed by stacking a plurality of flat-plate-shaped electrode plates, or a bellows-type electrode assembly formed by folding plates in a bellows shape.

The current collectors (the positive electrode current collector and the negative electrode current collector) are members having conductivity and rigidity and being electrically connected to the electrode terminals 11b and the electrode assembly. The positive electrode current collector is made of aluminum, an aluminum alloy or the like substantially in the same manner as the positive electrode substrate layer of the positive electrode plate. The negative electrode current collector is made of copper, a copper alloy, or the like substantially in the same manner as the negative electrode substrate layer of the negative electrode plate.

### [2.2 Description of other constituent elements]

The bus bar frame 12 is a flat rectangular member capable of electrically insulating the bus bars 13 and other members from each other. The bus bar frame 12 is also capable of restricting the positions of the bus bars 13. The bus bar frame 12 is formed of an insulating member made of a material such as polycarbonate (PC), polypropylene (PP), polyethylene (PE), polystyrene (PS), a polyphenylene sulfide resin (PPS), polyphenylene ether (PPE (including modified PPE)), polyethylene terephthalate (PET), polybutylene terephthalate (PBT), polyether ether ketone (PEEK), tetrafluoroethylene/perfluoroalkyl vinyl ether (PFA), polytetrafluoroethylene (PTFE), polyether sulfone (PES), an ABS resin, a composite material of the above-mentioned materials, ceramic or metal or the like to which insulating coating is applied.

Specifically, the bus bar frame 12 is placed above the plurality of energy storage devices 11, and is positioned with respect to the plurality of energy storage devices 11. The plurality of bus bars 13 are placed and positioned on the bus bar frame 12. With such a configuration, the respective bus bars 13 are positioned with respect to the plurality of energy storage devices 11, and are joined to the electrode terminals 11b that the plurality of energy storage devices 11 include respectively. A path forming member arranging portion 12a in which the path forming member 100 is arranged is formed on the bus bar frame 12. The path forming member arranging portion 12a is a portion that is disposed at a center portion of the bus bar frame 12 in the X axis direction and extends in the Y axis direction.

The respective bus bars 13 are disposed above the plurality of energy storage devices 11 (on the bus bar frame 12). Each bus bar 13 is a rectangular plate-shaped member that electrically connects the electrode terminals 11b of the plurality of energy storage devices 11 to each other. The bus bar 13 is made of metal such as aluminum, an aluminum alloy, copper, a copper alloy, a nickel material or the like. In the embodiment, each bus bar 13 connects the electrode terminals 11b of the energy storage devices 11 disposed adjacently to each other. With such a configuration, sixteen pieces of the energy storage devices 11 are connected in series. The plurality of bus bars 13 are divided into: a bus bar group arranged along the Y-axis direction on the X-axis positive direction side; and a bus bar group arranged along the Y-axis direction on the X-axis negative direction side. The path forming member 100 is disposed between these two bus bar groups. The mode of connecting the energy storage devices 11 is not limited to the mode described above, and the series connection and the parallel connection may be combined in any forms.

A detection line 13a that is a cable for detecting a state of each energy storage device 11 is connected to the bus bar 13 or the electrode terminal 11b of the energy storage device 11. The detection line 13a is an electric wire for measuring a voltage of the energy storage device 11, for measuring a temperature of the energy storage device, or for balancing a voltage between the energy storage devices 11. The detection line 13a is also referred to as a communication cable, a control cable, a communication line or a control line. A connector 13b that is connected to a circuit board of the circuit board unit 20 is connected to an end of the detection line 13a in the Y-axis negative direction. That is, the detection line 13a transmits information such as a voltage and a temperature of the energy storage device 11 to a circuit board of the circuit board unit 20 via the connector 13b. The detection line 13a also has a function of balancing a voltage between the energy storage devices 11 by discharging electricity from the energy storage device 11 having a high voltage by a control performed by the circuit board.

The outer case 18 is a case (module case) having a rectangular shape (box shape) that forms an outer case of the energy storage unit 10. That is, the outer case 18 is disposed outside the energy storage devices 11 and the like, fixes the energy storage devices 11 and the like at predetermined positions, and protects the energy storage devices 11 and the like from an impact or the like. The outer case 18 includes: the outer case body 14 that forms the body of the outer case 18; the outer case support 15 that supports the outer case body 14; and the outer case lid 17 that forms a lid (outer lid) of the outer case 18.

The outer case body 14 is a bottomed rectangular cylindrical housing in which an opening is formed. The outer case body 14 can be formed using any insulating member such as PC, PP or PE that can be used for forming the bus bar frame 12 described above. A cutout portion 14a through which the path forming member 100 passes is formed at an end of the outer case body 14 on the Y-axis positive direction side and at the center of an upper portion of the end. The cutout portion 14a is a rectangular cutout having an open upper side. The outer case support 15 and the outer case lid 17 are members that protect (reinforce) the outer case body 14. The outer case support 15 and the outer case lid 17 are formed of members made of metal such as stainless steel, aluminum, an aluminum alloy, iron, a plated steel plate, or the like. The outer case support 15 and the outer case lid 17 may be formed of members made of the same material, or may be formed of members made of different materials.

The outer case support 15 is a member that supports the outer case body 14 from a lower side (Z-axis negative direction). The outer case support 15 includes a bottom portion 15a, a circuit board unit mounting portion 16, and connecting portions 15b and 15c. The bottom portion 15a is a flat plate-shaped and rectangular portion that forms a bottom portion of the energy storage apparatus 1. The bottom portion 15a extends in parallel to the XY plane and in the Y-axis direction. The bottom portion 15a is disposed below the outer case body 14. The circuit board unit mounting portion 16 is a flat plate-shaped and rectangular portion raised in the Z-axis positive direction from an end of the bottom portion 15a on the Y-axis negative direction side. The circuit board unit 20 is mounted on the circuit board unit mounting portion 16. The connecting portion 15b is a portion that is disposed at an end of the circuit board unit mounting portion 16 on the Z-axis positive direction side, and protrudes in the Y-axis negative direction. The connecting portion 15b is connected to the outer case lid 17. The connecting portion 15c is a portion that is raised in the Z-axis positive direction from an end of the bottom portion 15a on the Y-axis positive direction side, and protrudes in the Y-axis positive direction. The connecting portion 15c is connected to the outer case lid 17.

The outer case lid 17 is a member that is disposed so as to close an opening formed on an upper surface of the outer case body 14. The outer case lid 17 has: a top surface portion 17a; and connecting portions 17b and 17c. The top surface portion 17a is a flat plate-shaped and rectangular portion that forms an upper surface portion of the energy storage apparatus 1. The top surface portion 17a extends in parallel to the XY plane and in the Y-axis direction. The top surface portion 17a is disposed above the outer case body 14. The connecting portions 17b are portions that are disposed at an end of the top surface portion 17a in the Y-axis negative direction, extend in the Z-axis negative direction, and protrude in the Y-axis negative direction. The connecting portions 17b are connected to the connecting portions 15b of the outer case support 15. The connecting portion 17c is a portion that extends in the Z-axis negative direction from an end of the top surface portion 17a in the Y-axis positive direction, and protrudes in the Y-axis positive direction. The connecting portion 17c is connected to the connecting portion 15c of the outer case support 15. A rectangular opening portion (not illustrated in the drawing) through which the path forming member 100 passes is formed in the middle of an upper end (an end in the Z-axis positive direction side) of the connecting portion 17c. As described above, the outer case support 15 and the outer case lid 17 are configured to be fixed to each other by connecting the connecting portions 15b and 15c and the connecting portions 17b and 17c by screwing or the like in a state where the outer case body 14 is sandwiched between the outer case support 15 and the outer case lid 17 in the vertical direction.

The path forming member 100 is a member that is disposed above the plurality of energy storage devices 11 (above the gas release valves 11c) and forms a discharge path for a gas discharged from the gas release valves 11c of the respective energy storage devices 11. To be more specific, the path forming member 100 is an elongated rectangular cylindrical member that is disposed in a state where the path forming member 100 extends in the Y axis direction straddling over the plurality of energy storage devices 11 in the Y axis direction. The path forming member 100 forms a gas discharge path through which a gas discharged from the gas release valve 11c flows in a predetermined direction (Y axis positive direction). The predetermined direction is an arrangement direction of the plurality of energy storage devices 11, and is also an arrangement direction of the plurality of gas release valves 11c that the plurality of respective energy storage devices 11 have. In this embodiment, the path forming member 100 is disposed above the bus bar frame 12 and is disposed in the path forming member arranging portion 12a of the bus bar frame 12. The path forming member 100 is disposed so as to protrude from an end of the outer case 18 in the Y-axis positive direction, and makes a gas discharged from the gas release valve 11c flow in the Y-axis positive direction and discharges the gas from an opening portion (gas discharge port) formed on the Y-axis positive direction side. The configuration of the path forming member 100 is described in detail later.

The circuit board unit 20 is a device capable of monitoring a state of the energy storage devices 11 that the energy storage unit 10 includes and also capable of controlling the energy storage devices 11. A circuit board and the like are incorporated in the circuit board unit 20. In this embodiment, the circuit board unit 20 is a flat rectangular member mounted on an end of the energy storage units 10 in the longitudinal direction. That is, the circuit board unit 20 is mounted on a side surface of the energy storage units 10 on the Y-axis negative direction side. Specifically, the circuit board unit 20 is mounted on the circuit board unit mounting portion 16 that is mounted on the outer case support 15 that the outer case 18 of the energy storage unit 10 includes.

### [3 Description of configuration of the path forming member 100 and configuration of rear cover 930 (gas discharge portion)]

Next, the configuration of the path forming member 100 and the configuration of the rear cover 930 (gas discharge portion) will be described in detail. Fig. 5 is an exploded perspective view of the respective constituent elements when the path forming member 100 according to this embodiment is disassembled. Specifically, Fig. 5 is a perspective view illustrating the configuration of the path forming member 100 in a state where respective constituent elements of the path forming member 100 and the energy storage device 11 are viewed from above. Fig. 5 illustrates the configurations of the constituent elements, and the positional relationship between the constituent elements and the energy storage device 11. In Fig. 5, one energy storage device 11 and one protruding portion 113 (broken line portion) that corresponds to the energy storage device 11 are illustrated. However, the same relationship is applied to other portions.

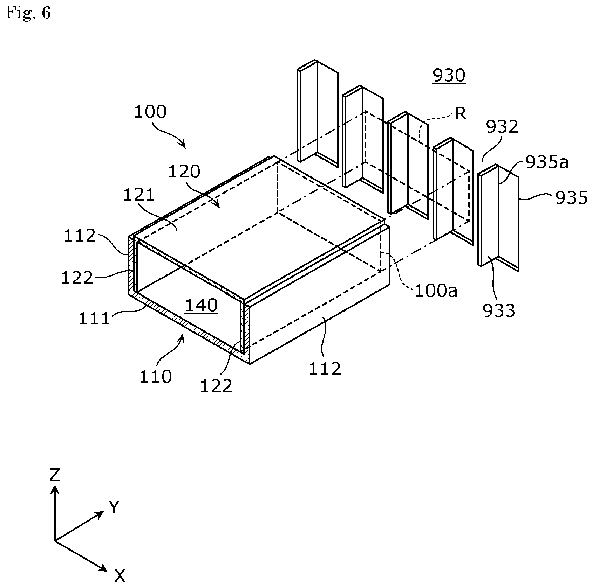

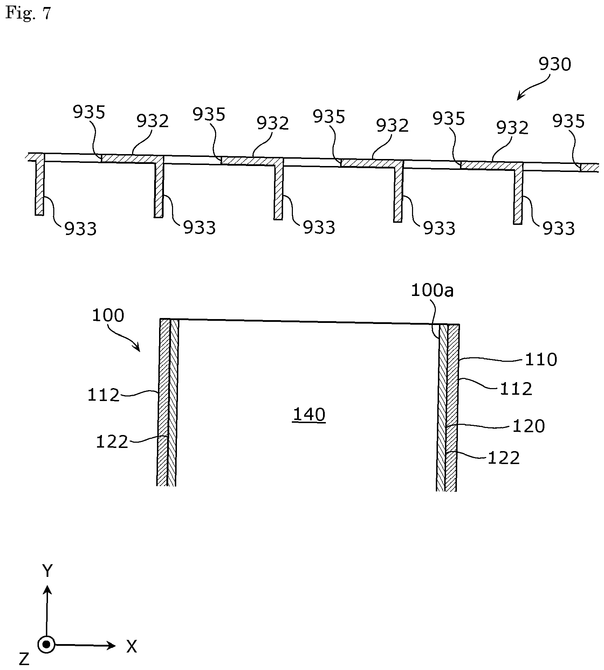

Fig. 6 is a perspective view illustrating the configuration of the path forming member 100 and the rear cover 930 (gas discharge portion) according to this embodiment. Fig. 6 illustrates the configuration in a case where an end of the path forming member 100 in the Y-axis positive direction is taken along a plane parallel to the XZ plane, and a portion of the rear cover 930 that faces the path forming member 100 is illustrated in an enlarged manner. Fig. 7 is a cross-sectional view illustrating the configuration of the path forming member 100 and the configuration of the rear cover 930 (gas discharge portion) according to the embodiment. More specifically, Fig. 7 is a cross-sectional view illustrating the configuration described in Fig. 6 taken along a plane parallel to an XY plane that passes a center portion of the path forming member 100 in the Z-axis direction.

### [3.1 Configuration of path forming member 100]

As illustrated in Fig. 5 to Fig. 7, the path forming member 100 includes a bottom side member 110 and an upper side member 120. The bottom side member 110 is a member having a substantially U-shape as viewed in the Y-axis direction and extending in the Y-axis direction. The bottom side member 110 is opened in the Z-axis positive direction. The bottom side member 110 is disposed just above the gas release valves 11c of the respective energy storage devices 11. The bottom side member 110 can be formed using any insulating member such as PC, PP or PE that can be used for forming the bus bar frame 12 described above. The bottom side member 110 may be formed of a conductive member made of metal or the like provided that the bottom side member 110 has a configuration that does not affect the electrical insulating property of the energy storage device 11 and the like.

A gas discharged from the gas release valve 11c passes through the bottom side member 110. Accordingly, the bottom side member 110 is preferably formed of a non-combustible member having high heat resistance. That is, the bottom side member 110 is preferably formed of a member that is made of a material that does not melt (or is not deformed) at a temperature that a high-temperature gas discharged from the gas release valve 11c has. The bus bar frame 12 or the outer case body 14 is made of PP, and the bottom side member 110 is made of PPS having higher heat resistance than the material of the bus bar frame 12 or the outer case body 14, ceramic or the like. In a case where the bus bar frame 12 and the bottom side member 110 are formed as a single body by integral molding, it is necessary to form the entirety of the bus bar frame 12 and the bottom side member 110 using a member having high heat resistance. However, in this embodiment, it is sufficient to form only the bottom side member 110 that is a body separate from the bus bar frame 12 using a member having high heat resistance. Accordingly, a use amount of the member having high heat resistance can be suppressed.

The upper side member 120 is a cover member that is disposed above the bottom side member 110, and is accommodated in the bottom side member 110 so as to close an open portion of the bottom side member 110. The upper side member 120 is a substantially U-shaped member as viewed in the Y-axis direction, is open in the Z-axis negative direction, and extends in the Y-axis direction. An end of the upper side member 120 in the Y-axis negative direction is closed, and an end of the upper side member 120 in the Y-axis positive direction is open. Accordingly, the upper side member 120 forms a gas discharge path 140 in cooperation with the bottom side member 110. The discharge path 140 is a passage for a gas that extends in the Y axis direction. A gas discharged from the gas release valve 11c of the energy storage device 11 flows through the discharge path 140. The gas flows through the discharge path 140 in the Y axis positive direction, and is discharged from an end of the discharge path 140 in the Y axis positive direction.

In the present embodiment, the upper side member 120 is formed such that the upper side member 120 has the same length as the bottom side member 110 in the Y axis direction. The upper side member 120 may be formed such that the upper side member 120 is longer than the bottom side member 110 in the Y axis direction so that the end of the upper side member 120 in the Y axis positive direction protrudes from the bottom side member 110. As an opposite case, the upper side member 120 may be set shorter than the bottom side member 110 in the Y axis direction. The upper side member 120 is preferably formed of a member having higher heat radiation property than the bottom side member 110. The upper side member 120 is formed of a member made of metal such as stainless steel, aluminum, an aluminum alloy, iron, or a plated steel plate.

Next, the configuration of the bottom side member 110 and the configuration of the upper side member 120 are described in further detail. The bottom side member 110 includes a bottom wall portion 111, a pair of first side wall portions 112, and protruding portions 113. The upper side member 120 includes an upper wall portion 121, a pair of second side wall portions 122, and a front wall portion 123.

The bottom wall portion 111 is a flat plate-like and rectangular-shaped portion that forms the bottom wall of the path forming member 100. The bottom wall portion 111 is disposed along the discharge path 140 for a gas discharged from the gas release valve 11c at the position where the bottom wall portion 111 faces the upper wall portion 121. To be more specific, the bottom wall portion 111 is disposed at the position where the bottom wall portion 111 opposedly faces the lid portions 11a2 of the containers 11a of the energy storage devices 11 in a state where the bottom wall portion 111 extends in the Y axis direction in parallel to the XY plane. A plurality of hole portions 111a that are arranged in the Y axis direction are formed in the bottom wall portion 111 at a middle portion in the X axis direction. The hole portions 111a are circular through holes that are disposed at positions where the hole portions 111a face the gas release valves 11c of the energy storage devices 11, and penetrate the bottom wall portion 111 in the Z axis direction. In this embodiment, sixteen hole portions 111a are arranged side by side in the Y axis direction corresponding to the sixteen energy storage devices 11. The hole portion 111a has the same shape as the gas release valve 11c as viewed in the Z-axis direction. However, the shape of the hole portion 111a is not particularly limited. However, from a viewpoint of ensuring the smooth discharge of a gas by suppressing the hole portion 111a from closing the opening of the gas release valve 11c when the gas release valve 11c is opened, the hole portion 111a preferably has the same shape as the shape of the gas release valve 111c or the shape larger than the shape of the gas release valve 11c as viewed in the Z-axis direction.

The first side wall portions 112 are flat-plate-shaped and rectangular portion that form the side walls of the path forming member 100. The first side wall portions 112 are connected to the bottom wall portion 111, and disposed along the discharge path 140. Specifically, the first side wall portions 112 are disposed such that the first side wall portions 112 are parallel to the YZ plane and extend in the Y axis direction. In this embodiment, the pair of first side wall portions 112 is disposed outside the pair of second side wall portions 122 such that the pair of first side wall portions 112 protrudes in the Z axis positive direction from both ends of the bottom wall portion 111 in the X axis direction.

Each protruding portion 113 is a convex portion that protrudes in the Z-axis negative direction from the periphery of the hole portion 111a so as to surround the periphery of the hole portion 111a of the bottom wall portion 111. The plurality of protruding portions 113 are arranged at a predetermined interval in the Y-axis direction. In other words, the protruding portion 113 is a part which protrudes from the bottom wall portion 111 toward the lid portion 11a2 of the container 11a of the energy storage device 11 such that the protruding portion 113 surrounds the periphery of the gas release valve 11c. In this embodiment, the protruding portion 113 is a cylindrical convex portion that protrudes in the Z-axis negative direction from the entire circumference of the hole portion 111a so as to continuously surround the entire circumference of hole portion 111a. The protruding portion 113 is the circular cylindrical convex portion whose inner peripheral surface has the same shape as the hole portion 111a as viewed in the Z-axis direction. However, the protruding portion 113 may be a convex portion whose inner peripheral surface has a cylindrical shape, an elliptical cylindrical shape, an elongated cylindrical shape, a square cylindrical shape, or the like having a size different from a size of the hole portion 111a. However, in order to suppress a gas leakage when the gas release valve 11c is opened, the inner peripheral surface of the protruding portion 113 preferably has the same shape as the hole portion 111a and the gas release valve 11c or a shape larger than the hole portion 111a and the gas release valve 11c as viewed in the Z-axis direction.

The upper wall portion 121 is a flat plate-like and rectangular-shaped portion that forms the upper wall of the path forming member 100. The upper wall portion 121 is disposed along the discharge path 140 for a gas discharged from the gas release valve 11c. To be more specific, the upper wall portion 121 is disposed at the position where the upper wall portion 121 faces the bottom wall portion 111 such that the upper wall portion 121 is parallel to the XY plane and extends in the Y-axis direction.

The second side wall portions 122 are flat-plate-shaped and rectangular portions that form the side walls of the path forming member 100. The second side wall portions 122 are connected to the upper wall portion 121, and are disposed along the discharge path 140. Specifically, the second side wall portions 122 are disposed such that the second side wall portions 122 are parallel to the YZ plane and extend in the Y axis direction. In this embodiment, the pair of second side wall portions 122 is disposed inside the pair of first side wall portions 112 such that the pair of second side wall portions 122 protrudes in the Z axis negative direction from both ends of the upper wall portion 121 in the X axis direction. In order to suppress a leakage of a gas from the discharge path 140, outer surfaces of the pair of second side wall portions 122 on both sides in the X axis direction are brought into contact with the inside of the pair of first side wall portions 112, and distal ends of the pair of second side wall portions 122 in the Z-axis negative direction are brought into contact with the bottom wall portion 111. The pair of second side wall portions 122 may be disposed outside the pair of first side wall portions 112.

The front wall portion 123 is a flat-plate-shaped and rectangular portion that forms a front wall of the path forming member 100. The front wall portion 123 is formed such that the front wall portion 123 is connected to the upper wall portion 121 and the second side wall portions 122. To be more specific, the front wall portion 123 protrudes in the Z-axis negative direction from the ends of the upper wall portion 121 and the pair of second side wall portions 122 in the Y axis negative direction, and is disposed parallel to the XZ plane. In order to suppress a leakage of a gas from the discharge path 140, the distal end of the front wall portion 123 in the Z-axis negative direction is brought into contact with the bottom wall portion 111.

The upper wall portion 121 is disposed above the pair of first side wall portions 112. With such a configuration, the upper wall portion 121 is pressed downward by the top surface portion 17a of the outer case lid 17. Due to such a pressing force, the pair of second side wall portions 122 and the front wall portion 123 are pressed against the bottom wall portion 111. Accordingly, it is possible to further suppress a leakage of a gas from the discharge path 140. When a gas is discharged from the gas release valve 11c, the upper side member 120 receives the gas. Accordingly, there is a possibility that the upper side member 120 lifts. On the other hand, in this embodiment, upper side member 120 receives a downward pressing force from the outer case lid 17. Accordingly, it is possible to suppress lifting of the upper side member 120 caused by discharging of a gas. A pressing force directed downward from the pair of second side wall portions 122 also acts on the bottom side member 110. Accordingly, the protruding portions 113 press the plurality of energy storage devices 11 downward. Accordingly, it is possible to suppress the formation of a gap between the protruding portions 113 and the lid portion 11a2. With such a pressing force, it is also possible to suppress the positional displacement of the plurality of energy storage devices 11 in the vertical direction.

### [3.2 Configuration of rear cover 930 (gas discharge portion)]

Next, the configuration of the rear cover 930 (gas discharge portion) is described in detail. As illustrated in Fig. 6 and Fig. 7, the rear cover 930 (gas discharge portion) is disposed in a predetermined direction (Y-axis positive direction) of the path forming member 100. Opening portions 935 (gas discharge openings) through which a gas discharged from the path forming member 100 is discharged are formed on the rear cover 930. Specifically, the rear cover 930 includes the opening portions 935, wall portions 932, and protruding portions 933.

The opening portions 935 each are a rectangular opening (discharge opening for a gas) elongated in the Z-axis direction. The opening portions 935 are disposed so as to face a gas discharge port 100a of the path forming member 100. The gas discharge port 100a is a rectangular opening (gas discharge port) that is formed on an end edge of the path forming member 100 in the Y-axis positive direction, and is elongated in the X-axis direction. That is, the opening portions 935 extend in the direction (Z-axis direction) that intersects with the longitudinal direction (X-axis direction) of the gas discharge port 100a of the path forming member 100. In this embodiment, the plurality of opening portions 935 are arranged side by side in the X-axis direction at positions that face the gas discharge port 100a. Specifically, as illustrated in Fig. 6, three opening portions 935 that are arranged in the X-axis direction are disposed at positions in the rear cover 930 that overlaps with a region R that faces the gas discharge port 100a. The number of opening portions 935 that are disposed at the positions overlapping with the region R is not particularly limited.

The wall portions 932 are each formed of a flat plate-shaped rectangular wall portion that is disposed at the position adjacent to the opening portion 935 (gas discharge opening) in the X axis direction. The wall portions 932 are parallel to the XZ plane, and are elongated in the Z axis direction. That is, the wall portions 932 are each formed of a wall portion that is disposed between two opening portions 935 disposed adjacently to each other in the X axis direction, and has no opening. A plurality of wall portions 932 are arranged side by side in the X axis direction. The wall portions 932 are wall portions that face the gas discharge port 100a.

The protruding portion 933 is a flat plate-shaped rectangular protrusion that is disposed along the opening portion 935 (gas discharge opening). The protruding portion 933 protrudes from the wall portion 932 in a direction (Y-axis negative direction) opposite to a predetermined direction (Y-axis positive direction). The protruding portion 933 is disposed parallel to the YZ plane, and is elongated in the Z-axis direction. That is, the protruding portion 933 is disposed so as to extend in the longitudinal direction (Z-axis direction) of the opening portion 935. Specifically, the protruding portion 933 protrudes from an end edge 935a of the opening portion 935 in the direction (Y-axis negative direction) opposite to the predetermined direction. The end edge 935a is an end edge of opening portion 935 in the X-axis negative direction, and is also an end edge of the wall portion 932 in the X- axis positive direction. The protruding portion 933 is integrally formed with the wall portion 932. The protruding portion 933 is formed as follows. A slit is formed in the rear cover 930 at a position disposed adjacently to the wall portion 932 thus forming the opening portion 935. Then, a portion of the rear cover 930 disposed within the opening portion 935 is bent from the wall portion 932 by approximately 90 ° in the Y-axis negative direction so as to form the protruding portion 933 that protrudes in the Y-axis negative direction. With such a configuration, the protruding portion 933 protrudes toward the gas discharge port 100a on one side of the opening portion 935 (gas discharge opening) that is the slit formed in the wall portion 932.

The protruding portions 933 are disposed at the positions that face the gas discharge port 100a of the path forming member 100. In this embodiment, the plurality of protruding portions 933 are arranged side by side in the X-axis direction at positions that face the gas discharge port 100a. That is, as illustrated in Fig. 6, two protruding portions 933 that are arranged in the X-axis direction are disposed at the positions that overlap with a region R of the rear cover 930 that faces the gas discharge port 100a. The number of protruding portions 933 that are disposed at the positions that overlap with the region R is not particularly limited.

### [4 Description of advantageous effects]

As has been described above, in the energy storage facility 900 according to the embodiment of the present invention, in the gas discharge portion (rear cover 930) of the housing (rack 901) that houses the energy storage apparatus 1), the gas discharge opening (opening portion 935) through which a gas is discharged is formed on the wall portion 932 that faces the gas discharge port 100a for a gas that the energy storage apparatus 1 includes. The gas discharge opening is a gas discharge opening through which a gas discharged from the path forming member 100 that forms the discharge path 140 for a gas from the gas release valve 11c of the energy storage device 11 is discharged. the gas discharge portion includes the protruding portions 933 that are disposed along the gas discharge openings, and protrude from the wall portions 932 disposed adjacently to the gas discharge openings toward the gas discharge port 100a. In this manner, in the gas discharge portion that is disposed on the gas outlet side of the path forming member 100, the protruding portions 933 that protrude from the wall portions 932 disposed adjacently to the gas discharge openings along the gas discharge openings toward the gas discharge port 100a of the energy storage apparatus 1 are formed. Accordingly, even when a substance such as the content in the energy storage device 11 is discharged from the gas discharge port 100a of the path forming member 100 together with a gas, the substance remains at the protruding portion 933 or is cut by the protruding portion 933 and hence, it is possible to suppress the clogging of the gas discharge opening by the substance. The advantageous effects of the present invention are specifically described hereinafter.

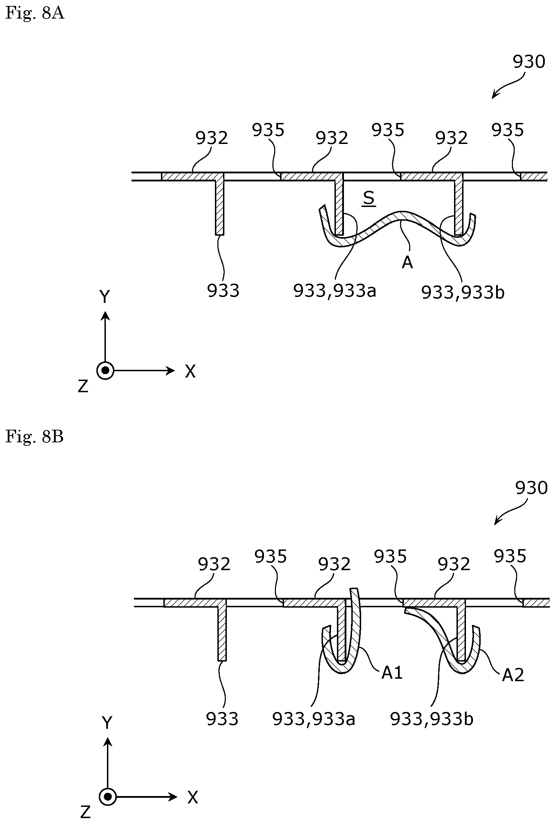

Fig. 8A and Fig. 8B are views for describing the advantageous effects acquired by forming the protruding portions 933 on the rear cover 930 (gas discharge portion) according to this embodiment. Specifically, Fig. 8A and Fig. 8B are cross-sectional views illustrating the rear cover 930 illustrated in Fig. 7.

As illustrated in Fig. 8A, in a case where a gas is discharged from the gas release valve 11c of the energy storage device 11 and the gas flows through the discharge path 140 of the path forming member 100 together with a relatively large (long) substance A, the substance A is caught by the protruding portions 933 (protruding portion 933a and 933b). In this case, the substance A is spaced apart from the opening portion 935. Accordingly, a space S can be secured between the substance A and the opening portion 935 and hence, it is possible to prevent the substance A from clogging the opening portion 935. That is, when the space S is formed between the substance A and the opening portion 935, the Z-axis direction side of the space S is easily opened. Accordingly, it is possible to suppress the interruption of discharging of a gas from the opening portion 935.

As illustrated in Fig. 8B, there may be a case where, in a state illustrated in Fig. 8A, the substance A may be cut by colliding with the protruding portions 933 (protruding portion 933a and the protruding portion 933b) and may be divided into a substance A1 and a substance A2. In this case, the relatively large (long) substance A is cut into relatively small (short) substances A1 and A2. Accordingly, it is estimated that the substances A1 and A2 are caught by the protruding portions 933a and 933b or jump out from the protruding portions 933a and 933b. Also with such a configuration, it possible to prevent the substances A1 and A2 from clogging the opening portion 935.

As described above, in the energy storage facility 900, when a gas is discharged from the gas release valve 11c of the energy storage device 11, it is possible to suppress the lowering of the gas discharge ability of discharging the gas to the outside.

In a case where the protruding portion 933 has a cylindrical shape such that the protruding portion 933 surrounds the periphery of the slit (opening portion 935), there is a possibility that, when a substance such as the content in the energy storage device 11 adheres to the protruding portion 933, the substance clogs the slit. However, in this embodiment, the protruding portion 933 is configured to protrude on one side of the slit (opening portion 935). Accordingly, a gap is easily formed even when the substance adheres to the protruding portion 933 and hence, it is possible to suppress clogging of the slit by the substance. Accordingly, it is possible to suppress the lowering of the gas discharge ability of discharging a gas to the outside.

With such a configuration, in the gas discharge portion (rear cover 930), the protruding portion 933 protrudes from the end edge 935a of the gas discharge opening (opening portion 935) and hence, the protruding portion 933 is disposed close to the gas discharge opening. Accordingly, it is possible to effectively suppress a substance such as the content in the energy storage device 11 from clogging the gas discharge opening and hence, it is possible to effectively suppress the lowering of gas discharge ability of discharging a gas to the outside.

With such a configuration, in the gas discharge portion (rear cover 930), the protruding portion 933 extends in the longitudinal direction of the gas discharge opening (opening portion 935). Accordingly, a substance such as contents in the energy storage device 11 remains on the protruding portion 933 or is cut by the protruding portion 933 over the longitudinal direction of the gas discharge opening. Accordingly, it is possible to effectively suppress a substance from clogging the gas discharge opening over the longitudinal direction of the gas discharge opening in the longitudinal direction of the gas discharge opening and hence, it is possible to effectively suppress the lowering of gas discharge ability of discharging a gas to the outside.

In the gas discharge portion (rear cover 930), the protrusion portion 933 is integrally formed with the wall portion 932 disposed adjacently to the gas discharge opening (opening portion 935). Accordingly, the protruding portion 933 can be easily formed by bending the protruding portion 933 from the wall portion 932. In this case, the number of parts can be reduced compared with a case where the protruding portion 933 is formed as a part separate from the wall portion 932. As has been described above, the energy storage facility 900 can suppress the lowering of discharge ability of discharging a gas to the outside with the simple configuration.

The gas discharge opening (opening portion 935) of the gas discharge portion (rear cover 930) extends in the direction that intersects with the direction of the gas discharge port 100a for a gas that flows through the path forming member 100. Accordingly, a substance that is elongated in the direction that intersects with the gas discharge opening is easily discharged from the gas discharge port 100a of the path forming member 100. As a result, if the protruding portion 933 is not formed on the gas discharge portion, the substance hardly passes through the gas discharge opening, and stays at the gas discharge opening and is liable to clog the gas discharge opening. Therefore, even in the configuration where the gas discharge opening extends in the direction that intersects with the longitudinal direction of the gas discharge port 100a of the path forming member 100, by forming the protruding portion 933 on the gas discharge portion, it is possible to suppress a substance from clogging the gas discharge opening. Accordingly, it is possible to suppress the lowering of the gas discharging ability of discharging a gas to the outside. The discharge opening extends in the direction that intersects with the longitudinal direction of the gas discharge port 100a. Accordingly, even if a substance discharged from the gas discharge port 100a remains at the gas discharge opening, it is possible to prevent the substance from clogging the entire gas discharge opening. Accordingly, it is possible to suppress a substance from clogging the entire gas discharge opening and hence, it is possible to suppress the lowering of gas discharge ability of discharging a gas to the outside.

### [5 Description of modification examples]

The energy storage facility and the energy storage facility according to the embodiment have been described heretofore. However, the present invention is not limited to the above described embodiment. That is, the embodiment disclosed this time is illustrative in all aspects, and is not limitative. The present invention includes all alterations which fall within the scope of claims or are considered equivalent to the present invention called for in claims.

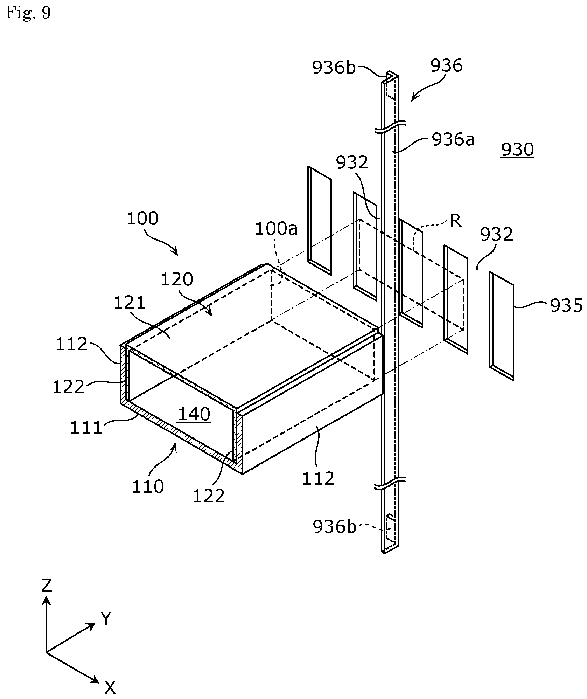

In the above exemplary embodiment, in the gas discharge portion (rear cover 930), the protruding portion 933 is formed integrally with wall portion 932. However, the protruding portion 933 may be formed as a part separate from the wall portion 932. Fig. 9 is a perspective view illustrating the configuration of a rear cover 930 (gas discharge portion) according to a modification example of the embodiment. Fig. 9 is a view that corresponds to Fig. 6.

As illustrated in Fig. 9, a protruding portion 936 is disposed in a gas discharge portion (rear cover 930) instead of the protruding portions 933. In this modification example, one protruding portion 936 is disposed so as to extend in the Z-axis direction on the side of the opening portion 935 at the center among five opening portions 935 (gas discharge openings). The protruding portion 936 is disposed so as to face gas discharge ports 100a of path forming members 100 of a plurality of energy storage apparatuses 1 arranged in the Z axis direction. The protruding portion 936 prevents a substance discharged from the plurality of gas discharge ports 100a from clogging the gas discharge openings that face the respective gas discharge ports 100a. One protruding portion 936 may be disposed in an extending manner corresponding to all energy storage apparatuses 1 arranged in the Z axis direction, or a plurality of protrusion portions 936 may be arranged side by side in the Z axis direction. The protruding portion 936 has substantially the same length as the opening portion 935 in the Z axis direction, and one protruding portion 936 may be disposed corresponding to one energy storage apparatus 1. A plurality of protrusion portions 936 may be arranged side by side in the X-axis direction corresponding to the respective opening portions 935.

The protruding portion 936 includes a protruding portion body portion 936a and a protruding portion mounting portion 936b. The protruding portion body portion 936a is a body portion of the protruding portion 936, and is an elongated flat plate-shaped portion that is disposed parallel to the YZ plane and extends in the Z axis direction. The protruding portion mounting portion 936b is a portion that is disposed at both ends of the protruding portion body portion 936a in the Z axis direction. The protruding portion mounting portions 936b are provided for mounting the protruding portion 936 on the wall portion 932. The protruding portion mounting portions 936b are mounted on the wall portion 932 by welding, screwing, bonding, or the like. Depending on a length of the protruding portion body portion 936a, only one protruding portion mounting portion 936b may be provided, or three or more protruding portion mounting portions 936b may be provided.

According to the present modification example, the protruding portion 936 is formed as a part separate from the wall portion 932. Accordingly, the rear cover 930 can be easily manufactured by a simple step of mounting the protruding portion 936 to the wall portion 932. By mounting the protruding portion 936 on an existing facility, the rear cover 930 that includes the protruding portion 936 can be easily manufactured. The number of parts is increased by providing the protruding portion 936 as a part separate from the wall portion 932. However, by reducing the number of protrusion portions 936 as illustrated in Fig. 9, the increase in the number of parts can be suppressed.

In the embodiment described above, the path forming member 100 is configured to be disposed so as to protrude from the outer case 18. However, the configuration may be adopted where the entirety of the path forming member 100 does not protrude from the outer case 18 or the bottom side member 110 or the upper side member 120 does not protrude from the outer case 18. The path forming member 100 may not be disposed on the bus bar frame 12. The path forming member 100 may be integrally formed with (integrated with) the bus bar frame 12. In this case, a wall of a wiring path disposed in the bus bar frame 12 may be also used as a portion of the path forming member 100 that forms a guide for a gas. The path forming member 100 may not have such a guide. It is sufficient for the path forming member 100 that the path forming member 100 has the gas discharge port 100a. In such a configuration, the predetermined direction described above may be a direction perpendicular to a surface by which the gas discharge port 100a is defined.

In the embodiment described above, the bottom side member 110 of the path forming member 100 has the pair of first side wall portions 112. However, the bottom side member 110 may not have one of the first side wall portions 112 or may have neither of the first side wall portions 112. The path forming member 100 may not have the bottom side member 110.

In the embodiment described above, the path forming member 100 is formed of an elongated rectangular cylindrical member. However, the shape of the path forming member 100 is not particularly limited. The path forming member 100 may have a circular cylindrical shape, an oblong cylindrical shape, an elliptical cylindrical shape, or a polygonal cylindrical shape other than a rectangular cylindrical shape, or the like. Further, the path forming member 100 may not be elongated. That is, the shape of the gas discharge port 100a of the path forming member 100 may be an elliptical shape, an oblong shape, a polygonal shape other than a rectangular shape or the like that is elongated in the X-axis direction. The shape of the gas discharge port 100a may be an elongated shape in the Z-axis direction, or may be a non-elongated shape such as a square shape, a regular polygonal shape, or a circular shape. The path forming member 100 may not have the split configuration formed of the bottom side member 110 and the upper side member 120. Instead, the path forming member 100 may be a cylindrical member that is an integral body formed of the bottom side member 110 and the upper side member 120.

In the embodiment described above, the upper side member 120 of the path forming member 100 has the front wall portion 123 and the pair of second side wall portions 122. However, the upper side member 120 may not have either one of the second side wall portions 122 or may have neither of the second side wall portions 122. The upper side member 120 may not have the front wall portion 123 so that a gas may be discharged from both sides of the path forming member 100 in the Y axis direction. In this case, both sides of the path forming member 100 in the Y axis direction may have the configuration described above, or only one side of the path forming member 100 in the Y axis direction may have the configuration described above.

In the embodiment described above, the energy storage apparatus 1 may not have the path forming member 100, and instead, a space in the energy storage apparatus 1 may function as the gas discharge path 140.

In the embodiment described above, the positions and the number of gas discharge openings (opening portions 935) formed in the gas discharge portion (rear cover 930) are not particularly limited. In the embodiment described above, openings are not formed in the wall portions 932 of the gas discharge portion (rear cover 930). However, openings may be formed in the wall portion 932. The gas discharge portion may not be formed of the rear cover 930. Instead, the gas discharge portion may be formed of a panel that is a part separate from the rear cover 930.

In the embodiment described above, the gas discharge opening (opening portion 935) is formed of a rectangular opening elongated in the Z axis direction. However, the shape of the opening portion 935 is not particularly limited, and may be an elliptical shape, an oblong shape, a polygonal shape other than a rectangular shape or the like that is elongated in the Z-axis direction. The shape of the opening portion 935 may be an elongated shape in the X-axis direction, or may be a non-elongated shape such as a square shape, a regular polygonal shape, or a circular shape. That is, the gas discharge opening (opening portion 935) may not extend in the direction that intersects with the longitudinal direction of the gas discharge port 100a for a gas of the path forming member 100.

In the embodiment described above, protruding portions 933 of the gas discharge portion (rear cover 930) are disposed such that the protruding portion 933 protrudes from the end edge 935a of the gas discharge opening (opening portion 935) in the X-axis negative direction and continuously extends in the longitudinal direction of the gas discharge opening. However, protruding portion 933 may protrude from an end edge of the gas discharge opening in the X-axis positive direction, or may protrude from an end edge of the gas discharge opening in the Z-axis positive direction or from an end edge of the gas discharge opening in the Z-axis negative direction. The protruding portion 933 may protrude from a position near the gas discharge opening but spaced apart from the gas discharge opening. The protruding portions 933 may be intermittently disposed along the gas discharge opening. A short protruding portion 933 may protrude in a direction along the gas discharge opening. The protruding portion 933 may not be formed in a straight-line shape along one edge of the gas discharge opening. Instead, the protruding portion 933 may be formed of an L-shaped portion that extends along two end edges of the gas discharge opening, may be formed of a U-shaped portion that extends along three end edges of the gas discharge opening, or may be formed of an annular (O-shaped) portion that extends along four end edges of the gas discharge opening. In a case where the protruding portion 933 is formed in an annular shape, for suppressing clogging of the gas discharge opening by a substance, instead of forming the protruding portion 933 continuously along the entire periphery of the gas discharge opening, the protruding portions 933 may be intermittently formed by forming slits or the like.

In the embodiment described above, the protruding portion 933 protrudes from the wall portion 932 in the Y-axis negative direction (the direction orthogonal to the wall portion 932) which is a direction opposite to the predetermined direction. However, the protruding portion 933 may protrude in a direction inclined from the Y-axis negative direction (a direction inclined from the direction orthogonal to the wall portion 932). That is, the above-described "direction opposite to the predetermined direction" may be any direction as long as the direction faces the Y-axis negative direction. The above-described "direction opposite to the predetermined direction" is a concept that includes not only the Y-axis negative direction but also a direction inclined from the Y-axis negative direction (direction inclined from the direction orthogonal to the wall portion 932).

The configurations that are formed by arbitrarily combining the respective constituent elements that the embodiments described above and the modification examples described above include also fall within the scope of the present invention.

The present invention can be realized not only as such an energy storage facility 900 but also as a housing (rack 901) or a combination of the housing and the path forming member 100 (discharge path 140) and/or the energy storage devices 11.

### INDUSTRIAL APPLICABILITY

The present invention is applicable to an energy storage facility that includes energy storage devices such as lithium ion secondary batteries or the like.

### DESCRIPTION OF REFERENCE SIGNS

1: energy storage apparatus
10: energy storage unit
11: energy storage device
11a: container
11a1: container body
11a2: lid portion
11b: electrode terminal
11c: gas release valve
11d: spacer
12: bus bar frame
12a: path forming member arranging portion
13: bus bar
13a: detection line
13b: connector
14: outer case body
14a: cutout portion
15: outer case support
15a: bottom portion
15b, 15c, 17b, 17c: connecting portion
16: circuit board unit mounting portion
17: outer case lid
17a: top surface portion
18: outer case
20: circuit board unit
30: cable
31: positive electrode power supply cable
32: negative electrode power supply cable
100: path forming member
100a: gas discharge port
110: bottom side member
111: bottom wall portion
111a: hole portion
112: first side wall portion
113: protruding portion
120: upper side member
121: upper wall portion
122: second side wall portion
123: front wall portion
140: discharge path
900: energy storage facility
901: rack
910: rack body
920: front cover
925, 935: opening portion
930: rear cover
932: wall portion
933, 933a, 933b, 936: protrusion
935a: end edge
940: shelf plate

## Claims

1. An energy storage facility comprising:
an energy storage apparatus that includes an energy storage device, a discharge path for a gas discharged from the energy storage device, and a gas discharge port for the gas; and
a housing that houses the energy storage apparatus, wherein
the housing includes a gas discharge portion that includes:
a wall portion that faces the gas discharge port; and
a gas discharge opening that is formed in the wall portion for discharging the gas, and
the gas discharge portion includes a protrusion that protrudes from the wall portion toward the gas discharge port.

2. The energy storage facility according to claim 1, wherein the gas discharge opening is a slit formed in the wall portion, and
the protrusion protrudes toward the gas discharge port on one side of the slit.

3. The energy storage facility according to claim 1 or 2, wherein the protrusion protrudes from an end edge of the gas discharge opening toward the gas discharge port.

4. The energy storage facility according to any one of claims 1 to 3, wherein the protrusion is disposed extending in a longitudinal direction of the gas discharge opening.

5. The energy storage facility according to any one of claims 1 to 4, wherein the protrusion is integrally formed with the wall portion.

6. The energy storage facility according to any one of claims 1 to 5, wherein the gas discharge opening extends in a direction that intersects with a longitudinal direction of the gas discharge port.
